# EUROPÄISCHE PATENTSCHRIFT

(11) **EP 1 430 647 B1**
(45) Veröffentlichungstag und Bekanntmachung des Hinweises auf die Patenterteilung: **14.06.2006**
(21) Anmeldenummer: 02774361.6
(22) Anmeldetag: 13.09.2002
(51) Int. Cl.: H04L 12/18, H04L 12/46, H04L 12/40

(54) **Verfahren zum Betrieb eines Koppelknotens in einem Datennetz**
Method for operating a switching node in a data network
Prodédé pour exploiter un noeud de commutation dans unréseau de transmission de données

(30) Priorität: 26.09.2001 DE 10147436; 14.08.2002 DE 10237351
(43) Veröffentlichungstag der Anmeldung: 23.06.2004
(73) Patentinhaber: SIEMENS AKTIENGESELLSCHAFT, 80333 München (DE)
(72) Erfinder: ARNOLD, Johann, 90530 Wendelstein (DE); KLOTZ, Dieter, 90768 Fürth (DE); MÜNCH, Christoph, 76344 Eggenstein (DE); SCHIMMER, Jürgen, 90473 Nürnberg (DE)
(86) Internationale Anmeldenummer: PCT/DE2002/003440
(87) Internationale Veröffentlichungsnummer: WO 2003/028290

(56) Entgegenhaltungen:
- EP-A- 0 841 782
- EP-A- 0 899 915
- US-A- 5 684 800

## Beschreibung

Die Erfindung betrifft ein Verfahren zum Betrieb eines Koppelknotens in einem Datennetz, sowie ein entsprechendes Computerprogrammprodukt, einen Koppelknoten und ein Kommunikationssystem.

Aus dem Stand der Technik sind verschiedene Typen von Datennetzen bekannt, bei denen die Datennetzkomponenten eine Entscheidung treffen, über welchen Port der betreffenden Datennetzkomponente ein Datentelegramm zu senden ist. Insbesondere sind auch so genannte schaltbare Datennetze bekannt, bei denen eine Verbindung in dem Datennetz zwischen zwei Teilnehmern mittels einer oder mehrerer Punkt-zu-Punkt Verbindungen gebildet wird.

Ebenfalls ist es aus dem Stand der Technik an sich bekannt, dass die Entscheidung, über welchen Port einer Datennetzkomponente ein zuvor empfangenes Datentelegramm zu senden ist, mit Hilfe einer Adresstabelle erfolgt. Jeder Eintrag in der Adresstabelle speichert z. B. die Stationsadresse einer Ziel-Datennetz-Komponente (eine so genannte Unicast-Adresse) oder eine Multicast-Adresse oder eine Netzwerkadresse sowie die Nummern der Ports der betreffenden Datennetzwerkkomponente, über die ein empfangenes Datentelegramm zur Weiterleitung an dessen Zieladresse zu senden ist.

Ferner ist aus dem Stand der Technik die Verwendung von dynamisch veränderbaren und statischen Adresstabellen bekannt. Dynamische Adresstabellen haben dynamisch veränderbare Tabelleneinträge, die von der Hardware der betreffenden Datennetzkomponente selbständig ohne Softwareunterstützung verwaltet werden. Dagegen werden die statischen Einträge in einer statischen Adresstabelle von der Anwendungssoftware jeder Datennetzkomponente verwaltet und dürfen von der Hardware einer Datennetzkomponente nicht verändert werden.

Eine aus dem Stand der Technik bekannte Möglichkeit zu erkennen, ob eine Adresse, z. B. eine Multicast-Adresse, und die der Multicast-Adresse zugeordneten Informationen in einer Adresstabelle gespeichert sind, ist der direkte Vergleich der Zieladresse des betreffenden Datentelegramms mit allen in der Adresstabelle gespeicherten Adressen. Dieses Verfahren ist zeitaufwändig oder setzt einen inhaltsadressierbaren Speicher voraus.

Ein Verfahren, das es erlaubt, Adresseinträge, die zunächst auf dieselbe Einsprungadresse der Adresstabelle abgebildet werden, gleichzeitig in einer Adresstabelle zu speichern, ist in US-A-5923660 beschrieben. In einem Ethernet-Kontroller ist dazu eine hash-Adresstabelle mit einer entsprechenden Steuerung vorgesehen, die den hash-Wert der Adresse eines Datenpakets bildet, um einen initialen Wert für einen Einsprung in die hash-Adresstabelle zu finden. Dieser initiale Wert wird erforderlichenfalls um einen festen Sprung-Wert geändert, wenn die Adresse, die in der durch den initialen Wert lokalisierten Zeile der hash-Adresstabelle nicht mit der empfangenen Zieladresse übereinstimmt.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, das heißt die Daten werden zu mehreren Paketen zusammengepackt und in dieser Form über das Datennetz an den entsprechenden Empfänger gesendet. Man spricht deshalb auch von Datenpaketen.

Der Begriff Übertragung von Daten wird hier synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein.

Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt Verbindungen, das heißt ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäss IEC 61491, EN61491 SERCOS interface - Technische Kurzbeschreibung (http://www.sercos.de/deutsch/index deutsch.htm) kann ein erfolgreicher echtzeitkritischer Datenverkehr der genannten Art in verteilten Automatisierungssystemen gewährleistet werden.

Aus dem Stand der Technik sind verschiedene standardisierte Kommunikationssysteme, auch Bussysteme genannt, zum Datenaustausch zwischen zwei oder mehreren elektronischen Baugruppen bzw. Geräten bekannt, insbesondere auch für den Einsatz in Automatisierungssystemen. Beispiele für solche Kommunikationssysteme sind: Feldbus, Profibus, Ethernet, Industrial Ethernet, FireWire oder auch PC-interne Bussysteme (PCI). Diese Bussysteme sind jeweils für unterschiedliche Anwendungsfelder konzipiert bzw. optimiert und erlauben den Aufbau eines dezentralen Steuerungssystems. Für die Prozesssteuerung und -überwachung in der automatisierten Fertigung und insbesondere bei digitalen Antriebstechniken sind sehr schnelle und zuverlässige Kommunikationssysteme mit vorhersagbaren Reaktionszeiten erforderlich.

Insbesondere aus der Automatisierungstechnik sind synchrone, getaktete Kommunikationssysteme mit Äquidistanz-Eigenschaften bekannt. Hierunter versteht man ein System aus wenigstens zwei Teilnehmern, die über ein Datennetz zum Zweck des gegenseitigen Austauschs von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein- / Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im Folgenden Regler- oder Steuerungseinheiten jeglicher Art verstanden.

Ein äquidistanter deterministischer zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Taktschläger) zu den anderen Komponenten übertragen. Bei isochronem Realtime-Ethernet wird der Takt bzw. die Zeitbasis von einem Synchronisationsmaster durch das Senden von Synchronisationstelegrammen vorgegeben.

In der deutschen Patentanmeldung DE 100 58 524.8 ist ein System und ein Verfahren zur Übertragung von Daten über schaltbare Datennetze, insbesondere das Ethernet, offenbart, das einen Mischbetrieb von echtzeitkritischer und nichtechtzeitkritischer, insbesondere Inter- bzw. Intranet basierter Datenkommunikation, erlaubt.

Aus dem Stand der Technik ist es ferner bekannt, dass die Komponenten eines schaltbaren Datennetzes die Entscheidung, über welchen Port eines Koppelknotens ein Datentelegramm zu senden ist, mit Hilfe von dynamischen Adresstabellen treffen. Eine dynamische Adresstabelle speichert jeweils Stationsadressen von Netzwerk-Komponenten und die Angabe des Ports, über den ein Datentelegramm an diesen Netzwerkteilnehmer zu senden ist. Da sich die Netzwerkkonfiguration (z. B. durch Aktivierung /Deaktivierung bzw. Ausfall oder Umverdrahtung) dynamisch ändern kann und da aufgrund der begrenzten Speicherkapazität nicht alle Stationsadressen gleichzeitig in einer Adresstabelle gespeichert werden können, sind die von der Netzwerkkomponente, das heißt, z. B. von einem Koppelknoten, verwalteten Tabelleneinträge dynamisch änderbar.

Da Komponenten eines Datennetzes z. B. ausfallen oder umverdrahtet werden können, kann ein Alterungsmechanismus vorgesehen sein, der einen Adresseintrag für ungültig erklären kann, wenn eine bestimmte Bedingung des gewählten Alterungsverfahrens erfüllt ist.

Aus dem Stand der Technik ist ein entsprechendes Alterungsverfahren bekannt, bei dem innerhalb eines parametrierbaren Zeitintervalls ein Datentelegramm von der betreffenden Netzwerkkomponente mit der in der Adresstabelle eingetragenen Stationsadresse empfangen werden muss, um als gültig gekennzeichnet zu bleiben.

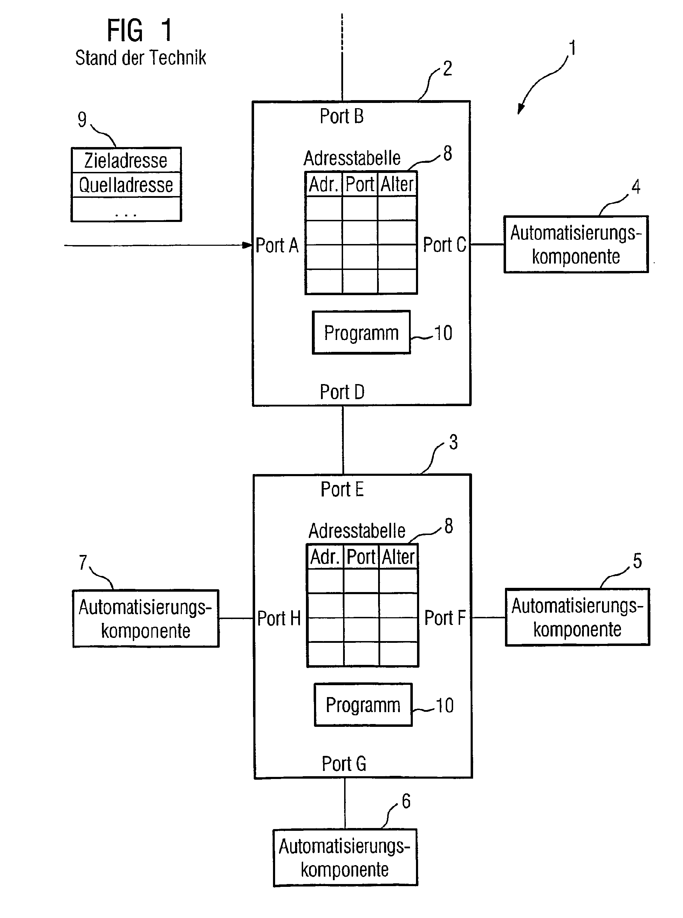

Ein entsprechendes aus dem Stand der Technik bekanntes Datennetz zeigt die Figur 1. Das Datennetz 1 beinhaltet einen Koppelknoten 2 mit den Ports A, B, C und D sowie einen Koppelknoten 3 mit den Ports E, F, G und H. Der Port C des Koppelknotens 2 ist mit einer Automatisierungskomponente 4 verbunden und der Port B mit einem weiteren Koppelknoten, der in der Figur 1 der Übersichtlichkeit halber nicht gezeigt ist.

Ferner ist der Port D mit dem Port E des Koppelknotens 3 verbunden. Die Ports F, G und H des Koppelknotens 3 sind mit den Automatisierungskomponenten 5, 6 bzw. 7 verbunden.

Jeder der Koppelknoten 2 und 3 beinhaltet eine Adresstabelle 8. Jede Zeile einer Adresstabelle 8 beinhaltet eine Stationsadresse einer der Komponenten des Datennetzes 1, das heißt, beispielsweise einer der Automatisierungskomponenten 4, 5, 6 oder 7. Ferner beinhaltet eine betreffende Zeile der Adresstabelle 8 des Koppelknotens eine Angabe des Ports dieses Koppelknotens, von dem ein von dem Koppelknoten empfangenen Datentelegramm mit der Stationsadresse als Zieladresse weiterzuleiten ist. Darüber hinaus beinhaltet eine solche Zeile der Adresstabelle 8 einen Eintrag hinsichtlich der Alterung des Eintrags in der betreffenden Zeile, das heißt, hinsichtlich der Gültigkeit dieses Eintrags.

Ein Eintrag in einer Zeile der Adresstabelle 8 wird dann generiert, wenn ein Datentelegramm 9 mit einer Quelladresse und einer Zieladresse empfangen wird, beispielsweise an dem Port A des Koppelknotens 2. Hierbei kann es sich beispielsweise um ein Ethernet-Datentelegramm handeln.

Die Tatsache, dass an dem Port A ein Datentelegramm mit der betreffenden Quelladresse empfangen worden ist, wird in der Adresstabelle 8 als Eintrag in einer Zeile der Adresstabelle festgehalten. Ein Alterungs-Bit in der betreffenden Zeile der Adresstabelle 8 wird z. B. auf 0 gesetzt, um die Aktualität dieses Eintrags anzuzeigen.

Jeder der Koppelknoten 2 und 3 hat eine Zeitbasis, die jeweils global für die Adresstabelle 8 gilt. Die Zeitbasis kann mit einem Zähler realisiert sein, der jeweils bis zu einem Schwellwert zählt.

Nachdem ein aktueller Eintrag in der Adresstabelle 8 erzeugt worden ist, und der Zähler zurückgesetzt wird, wird das Alterungs-Bit z. B. von 0 auf 1 gesetzt. Der Eintrag ist dann immer noch gültig. Wenn zu einem Zeitpunkt, zu dem das Alterungs-Bit auf 1 gesetzt ist, ein weiteres Datentelegramm 9 empfangen wird, wird das Alterungs-Bit wieder z. B. auf 0 zurückgesetzt. Ist dies nicht der Fall, so wird beim nächsten Zurücksetzen des Zählers das Alterungs-Bit z. B. auf 2 gesetzt, was anzeigt, dass der Eintrag ungültig ist.

Die Verwaltung der Adresstabellen 8 erfolgt dabei mittels eines Programms 10.

Bei den Datentelegrammen wird im Allgemeinen zwischen den folgenden Kategorien unterschieden:
- Unicast-Telegramme sind an eine einzige Netzwerk-Komponente gerichtet,
- Multicast-Telegramme sind an eine Gruppe von Netzwerk-Komponenten gerichtet,
- Broadcast-Telegramme sind an alle Komponenten eines Netzwerks gerichtet.

Empfängt eine Netzwerk-Komponente ein Unicast- oder Multicast-Telegramm, entscheidet diese Komponente mit Hilfe einer Unicast- oder Multicast- Adresstabelle, über welchen Port bzw. über welche Ports dieses Telegramm weiterzuleiten ist. Während die Einträge einer Multicast-Adresstabelle von der Projektierung vorgegeben werden, enthält die Unicast-Adresstabelle neben projektierten Einträgen auch dynamische Einträge.

Da Broadcast-Telegramme an alle Netzwerk-Komponenten gerichtet sind, werden diese immer über alle Ports gesendet und der lokalen Anwenderschnittstelle der Netzwerk-Komponenten übergeben. Deshalb können Broadcast-Telegramme ein Netzwerk und die Recheneinheiten der Anwenderschnittstellen erheblich belasten.

Übliche auf OSI-Layer 2 Ebene arbeitende Koppelknoten bauen ihre Adresstabelle anhand der Quelladressen der empfangenen Telegramme auf. In der Adresstabelle ist die Adresse und der Port, an dem das entsprechende Telegramm empfangen wurde, vermerkt. Empfangene Telegramme mit einer Zieladresse, die in der Adresstabelle vorhanden ist, werden gezielt an den/die in der Adresstabelle eingetragenen Port/Ports verteilt, wodurch eine Lastreduktion im Netz erreicht wird.

In einem mit Switches arbeitenden Netzwerk werden sehr häufig bidirektionale Verbindungen (z.B. TCP/IP-Verbindungen) zwischen angeschlossenen Endgeräten verwendet. Infolge der Filtereigenschaften der Koppelknoten bleibt dieser bidirektionale (Unicast-Verkehr) auf den Netzwerkteil begrenzt, in dem die entsprechenden Endgeräte angeschlossen sind. Broadcast-Telegramme werden hingegen im gesamten Layer 2-Netzwerk verteilt und führen dazu, dass bei sehr vielen angeschlossenen Endgeräten die in ihrer Größe begrenzten Adresstabellen der Switches "überlaufen", das heißt neue Sourceadressen nicht mehr abgespeichert werden.

Das führt dazu, dass dann auch Unicast-Datenverkehr z.T. über alle Ports eines Switches verteilt wird, so dass die Lastentkopplung im Netz reduziert wird. Eine häufig verwendete Methode der Reduktion der Broadcast-Telegramme ist die Anzahl der gesendeten Broadcast-Telegramme auf einen einstellbaren Schwellwert zu begrenzen. Im Allgemeinen wird versucht mit sehr großen Adresstabellen zu arbeiten, die entsprechend viel Speicherplatz benötigen oder es wird eine reduzierte Lastentkopplung in Kauf genommen.

Aus der EP 0 841 782 A1 ist ein Verfahren zum Betrieb eines Koppelknotens in einem Netzwerk bekannt, bei welchem zur Verringerung der Netzwerklast die Ausbreitung von Broadcast-Telegrammen begrenzt wird. Der Koppelknoten verfügt über eine dynamische Adresstabelle, die es ihm ermöglicht, nach Adressen zu schauen, die der Knoten im früheren Telegrammen empfangen hat, und Unicast-Telegramme gezielt an diese Adressen weiterzuleiten. Wenn ein Broadcast-Telegramm oder ein Telegramm mit einer unbekannten Adresse an einem Port des Koppelknotens empfangen wird, wird das Telegramm zu einer Virtual Switching Engine weitergeleitet. Diese zeichnet jede unbekannte Adresse auf und das Telegramm wird über geeignete Ports weitergeleitet. Während die Virtual Switching Engine auf eine Antwort auf das Telegramm wartet, trägt sie die Quelladresse des Telegramms in die dynamische Adresstabelle ein mit einem Vermerk, an welchem Port die Quelle des Telegramms angeschlossen ist. Wenn die Virtual Switching Engine eine Antwort auf das weitergeleitete Telegramm empfängt, trägt sie in die dynamische Adresstabelle ein, an welchem Port das antwortende Gerät angeschlossen ist. Zur Verringerung der Netzwerklast beantwortet die Virtual Switching Engine Broadcast-Telegramme für alle bekannten Adressen als Proxy, ohne diese über die weiteren Ports weiterzuleiten.

Der Erfindung liegt daher die Aufgabe zugrunde, ein verbessertes Verfahren zum Betrieb eines Koppelknotens in einem Datennetz, zu schaffen, sowie ein entsprechendes Computerprogrammprodukt, einen Koppelknoten und ein Kommunikationssystem.

Die der Erfindung zugrunde liegenden Aufgaben werden mit den Merkmalen der entsprechenden unabhängigen Patentansprüche jeweils gelöst. Bevorzugte Ausführungsformen der Erfindung sind in den abhängigen Patentansprüchen angegeben.

Erfindungsgemäß wird ein von einem Koppelknoten empfangenes Datentelegramm daraufhin geprüft, ob es sich um ein Broadcast-Telegramm handelt. Wenn es sich nicht um ein Broadcast-Telegramm handelt, sondern um ein Unicast-Telegramm, so wird die Quelladresse des Datentelegramms an eine dynamische Adresstabelle übergeben. Für den Fall jedoch, dass es sich bei dem empfangenen Datentelegramm um ein Broadcast-Telegramm handelt, erfolgt keine Übergabe der Quelladresse an die dynamische Adresstabelle, sondern das Datentelegramm wird lediglich über die weiteren Ports des Koppelknotens weitergeleitet. Der Hintergrund hierfür ist die Erkenntnis, dass ein Broadcast-Telegramm keine relevante Information hinsichtlich des "Lernens" der dynamischen Adresstabelle beinhaltet, sondern diese lediglich mit nicht relevanter Information "überflutet", so dass auch wertvolle Information hinsichtlich der Quelladressen der Unicast-Telegramme verloren gehen kann. Aufgrund dessen werden erfindungsgemäß Broadcast-Telegramme nicht zum Training der dynamischen Adresstabelle verwendet.

Allerdings kann es Situationen geben, in denen das Lernen der Adresstabelle auch mit Braodcasttelegrammen sinnvoll ist. Für solche Fälle ist es vorteilhaft, wenn das Lernen der Adresstabelle über Broadcasttelegramme aus- bzw. einstellbar ist.

Nach einer bevorzugten Ausführungsform der Erfindung erfolgt die Prüfung, ob es sich bei einem empfangenen Datentelegramm um ein Broadcast-Telegramm handelt, mit Hardwareunterstützung. Hierzu wird vorzugsweise eine spezialisierte Logik-schaltung, wie z. B. ASIC verwendet. Dies hat den Vorteil, dass der Prozessor, auf dem die Anwendung läuft, nicht durch die Prüfung, ob es sich bei einem empfangenen Datentelegramm um ein Broadcast-Telegramm handelt, aufgehalten werden muss.

Nach einer weiteren bevorzugten Ausführungsform der Erfindung wird anhand der Adresse geprüft, ob es sich um ein Broadcast-Telegramm handelt.

Nach einer weiteren bevorzugten Ausführungsform der Erfindung wird ein von einem Koppelknoten empfangenes Datentelegramm daraufhin geprüft, ob es eine ARP-Anforderung (ARP: Address Resolution Protocol) des Internet-Protokolls (IP) beinhaltet. Wenn dies der Fall ist, ergibt sich daraus, dass es sich um ein Broadcast-Telegramm handelt. Nur für den Fall, dass die IP-Zieladresse des empfangenen Datentelegramms gleich der IP-Stationsadresse des Koppelknotens ist, wird das Datentelegramm an die Anwenderschnittstelle übergeben.

ARP-Request-Telegramme erlauben eine Abbildung von IP-Adressen auf physikalische (Layer 2) Adressen, z. B. Ethernet-Adressen. ARP-Request-Telegramme sind an speziellen Kennungen eines MAC-Frames zu erkennen, bei Ethernet z. B. an der Typ-Kennung 0806H. Die notwendigen Layer 3 Informationen sind im Nutzdatenfeld dieser MAC-Telegramme enthalten.

Die vorliegende Erfindung lässt sich insbesondere vorteilhaft einsetzen für
- eine Entlastung der Recheneinheiten der Netzwerk-Komponenten durch Filterung nicht benötigter ARP-Telegramme,
- eine Entkopplung der Filterfunktion der Einträge in der Unicast-Adresstabelle von der Anzahl der empfangenen Broadcast-Telegramme mit unterschiedlichen Sourceadressen.

Besonders vorteilhaft ist der Einsatz der erfindungsgemäßen Filtermechanismen für Broadcast-Telegramme bei Echtzeit-Ethernet-Kommunikation im Feldbusbereich.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Roboter, Handlingssystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- Figur 1: ein Blockdiagramm eines aus dem Stand der Technik bekannten Kommunikationssystems mit dynamischen Adresstabellen in den Koppelknoten,
- Figur 2: ein Blockdiagramm einer Ausführungsform eines erfindungsgemäßen Koppelknotens,
- Figur 3: eine schematische Darstellung eines Datentelegramms mit ARP-Anforderung,
- Figur 4: ein Flussdiagramm zur Darstellung einer bevorzugten Ausführungsform der Arbeitsweise des Koppelknotens der Figur 2,
- Figur 5: eine Ausführungsform eines erfindungsgemäßen Kommunikationssystems mit einem BroadcastTelegramm,
- Figur 6: das Kommunikationssystem der Figur 5 mit einem Unicast-Telegramm.

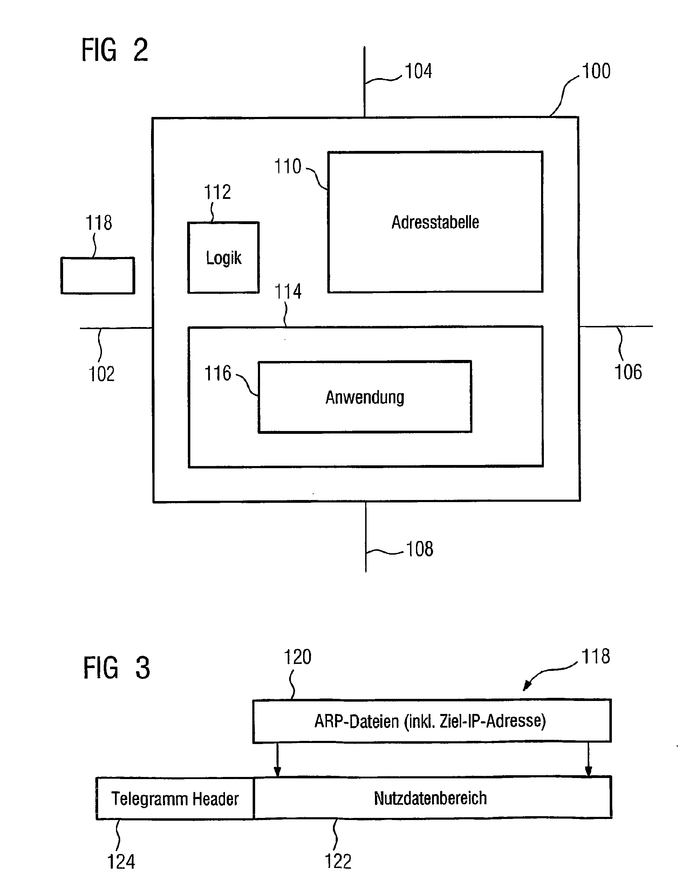

Die Figur 2 zeigt einen Koppelknoten 100 eines Datennetzes, wobei es sich bei dem Datennetz z. B. um ein Realtime-Ethernet handelt. Der Koppelknoten hat die Ports 102, 104, 106 und 108. Über die Ports 102 bis 108 ist der Koppelknoten 100 mit anderen Koppelknoten oder mit Zielknoten des Datennetzes verbunden.

Der Koppelknoten 100 hat eine dynamische Adresstabelle 110. Ferner hat der Koppelknoten 100 eine Logik-Schaltung 112, bei der es sich vorzugsweise um ein ASIC-Modul handelt.

Ferner hat der Koppelknoten 100 einen Mikroprozessor 114, auf dem eine Anwendung 116 läuft.

Wenn der Koppelknoten 100 ein Datentelegramm 118 an seinem Port 102 empfängt, so wird von der Logik-Schaltung 112 geprüft, ob es sich um ein Broadcast- oder ein Unicast-Telegramm handelt. Wenn es sich um Unicast-Telegramm handelt, so erfolgt eine Übergabe der Quelladresse des Datentelegramms 118 an die Adresstabelle 110, um diese dynamisch anzupassen. Handelt es sich jedoch um ein Broadcast-Telegramm, so erfolgt lediglich eine Weiterleitung des Datentelegramms 118 über die weiteren Ports des Koppelknotens, das heißt die Ports 104, 106 und 108.

Für den Fall, dass es sich um ein Broadcast-Telegramm handelt und das ARP-Protokoll Verwendung findet, wird von der Logik-Schaltung 112 ferner geprüft, ob die IP-Zieladresse in dem Datentelegramm 118 mit der IP-Stationsadresse des Koppelknotens 100 übereinstimmt. Nur wenn dies der Fall ist, erfolgt eine Übergabe des Datentelegramms 118 an die Anwendung 116. Dies hat den Vorteil, dass die Verarbeitungskapazität des Prozessors 114 nicht durch ARP-Broadcast-Telegramme belastet wird, die nicht an den Koppelknoten 100 als IP-Zieladresse gerichtet sind.

Von besonderem Vorteil ist ferner, dass die dynamische Adresstabelle 110 nicht mit Quelladressen von Broadcast-Telegrammen "überflutet" wird, sondern dass nur Unicast-Telegramme zur dynamischen Adaption der Adresstabelle 110 verwendet werden.

Broadcast-Telegramme können von der Logik-Schaltung 112 an Hand einer speziellen Layer 2 MAC-Adresse des OSI (Open Systems Interconnection) 7-Schichten-Models erkannt werden, z. B. bei einer Ethernet-Anwendung daran, dass sich nur logische Einsen im Feld für die Zieladresse befinden.

Zur Ausfilterung von Broadcast-Telegrammen kommen verschiedene Filtermechanismen in Frage:

Der Anwenderschnittstelle einer Netzwerkkomponente werden nur Broadcasttelegramme eines bestimmten Typs und einer parametrierbaren Adresse der Schicht 3 des OSI- 7-Schichten Modells übergeben. Ein Beispiel sind ARP-Request-Telegramme (ARP:
Address Resolution Protocol) des Internet-Protokolls (IP) mit einer Ziel-IP-Adresse, die gleich der eigenen IP-Adresse sein muss. Alle anderen Layer 3 Broadcasttelegramme dieses Typs werden gefiltert.

Im Allgemeinen wird dabei vorzugsweise so vorgegangen, dass bei Broadcasttelegrammen Filterregeln auf das Telegramm angewendet werden. Nur wenn diese Filterregeln erfüllt sind, wird das Telegramm an die Anwendung weitergegeben.

Ein weiterer Filtermechanismus ist in der Figur 3 veranschaulicht. Figur 3 zeigt ein Datentelegramm 118 mit einer ARP-Anforderung 120, die eine Ziel-IP-Adresse beinhaltet.

Das Datentelegramm 118 hat ferner einen Nutzdatenbereich 122 sowie einen Telegramm-Header 124.

Das Datentelegramm 118 mit der ARP-Anforderung 120 erlaubt eine Abbildung von IP-Adressen auf physikalische (Layer 2) Adressen, z. B. Ethernet-Adressen. Die Erkennung der ARP-Anforderung 120 kann an Hand einer speziellen Kennung eines MAC-Frames vorgenommen werden, bei Ethernet z. B. an der Typ-Kennung 0806H. Die notwendigen Layer 3 Informationen sind im Nutzdatenbereich 122 enthalten.

Die Logik-Schaltung 112 (vgl. Figur 2) prüft also ein empfangenes Datentelegramm 118 daraufhin, ob es eine Broadcast Adresse oder eine ARP-Anforderung 120 beinhaltet. Ist dies der Fall, so handelt es sich um ein Broadcast-Telegramm.

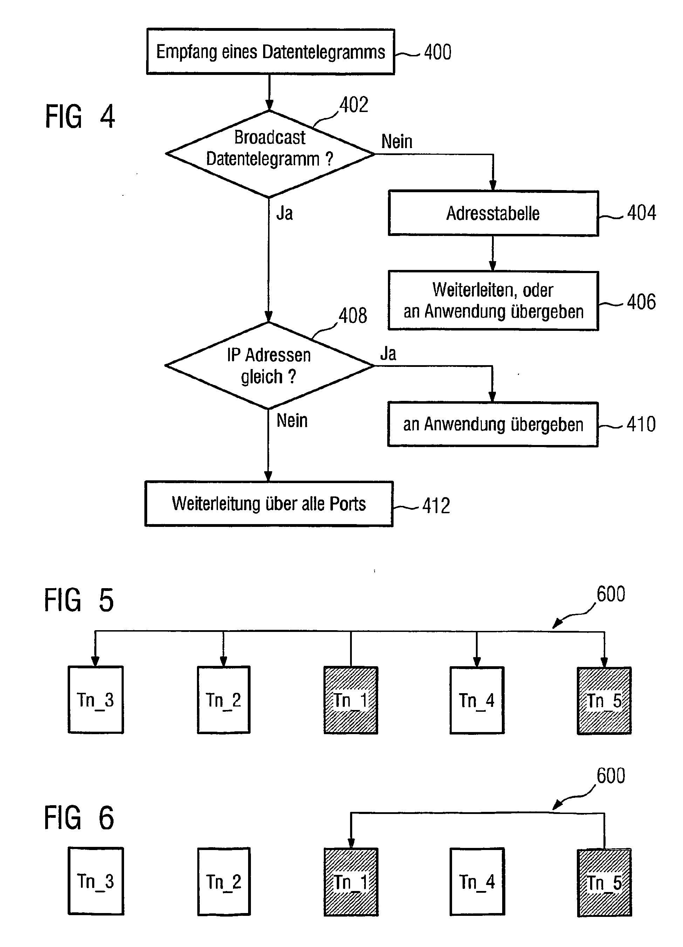

Die Figur 4 zeigt ein Flussdiagramm einer bevorzugten Ausführungsform eines Verfahrens zum Betrieb eines Koppelknotens, wie er in der Figur 2 dargestellt ist.

In dem Schritt 400 wird ein Datentelegramm an einem Port des Koppelknotens empfangen. In dem Schritt 402 wird mit Hardwareunterstützung geprüft, ob es sich bei dem Datentelegramm um ein Broadcast-Telegramm handelt. Wenn dies nicht der Fall ist, wird das Datentelegramm zum Trainieren einer dynamischen Adresstabelle in dem Schritt 404 verwendet. In dem Schritt 406 wird das Datentelegramm über zumindest einen Port des Koppelknotens entsprechend seiner Zieladresse weitergeleitet, oder an die Anwendung des Koppelknotens übergeben, wenn die Ziel-Adresse des Datentelegramms gleich der Stationsadresse des Koppelknotens ist.

Wenn die Prüfung in dem Schritt 402 ergibt, dass es sich um ein Broadcast-Telegramm handelt, so wird in dem Schritt 408 geprüft, ob die Ziel-IP-Adresse des Broadcast-Telegramms gleich der IP-Stationsadresse des Koppelknotens ist. Wenn dies der Fall ist, wird das Broadcast-Telegramm in dem Schritt 410 an die Anwendung übergeben, wenn die Filterregeln erfüllt sind. Ferner erfolgt in dem Schritt 412 eine Weiterleitung des Broadcast-Telegramms über alle weiteren Ports des Koppelknotens.

Die Figur 5 zeigt ein Kommunikationssystem mit einem Datennetz 600, an das Teilnehmer Tn_1, Tn_2, Tn_3, Tn_4 und Tn_5 gekoppelt sind. Die Teilnehmer sind dabei prinzipiell gleich aufgebaut wie der Koppelknoten 100 der Figur 2. Der Teilnehmer Tn_1 kennt nur die IP-Adresse von Tn_5. Um auch die physikalische MAC-Adresse zu erfahren, versendet Tn_1 einen ARP-Request als Broadcast-Telegramm. Mit der erfindungsgemäßen Filterfunktion wird dieses Telegramm nur der Anwendung von Tn_5 übergeben, das heißt, keine Anwenderschnittstelle eines anderen Netzwerkknotens erhält diese ARP-Anforderung.

Die Figur 6 zeigt das Datennetz 600, nachdem der Teilnehmer Tn_5 das Broadcast-Telegramm mit der ARP-Anforderung von dem Teilnehmer Tn_1 empfangen hat. Der Teilnehmer Tn_5 bearbeitet die ARP-Anforderung und antwortet dem Teilnehmer Tn_1 mit seiner MAC-Adresse, die der Ziel-IP-Adresse entspricht. Diese Antwort erfolgt also in Form eines Unicast-Telegramms.

## Patentansprüche

1. Verfahren zum Betrieb eines Koppelknotens (100) in einem Feldbus eines Automatisierungssystems, wobei der Feldbus für die Echtzeit-Kommunikation ausgebildet ist, mit folgenden Schritten:
- Empfang (400) eines Datentelegramms (118) an einem ersten Port (102) des Koppelknotens (100),
- Prüfung (402), ob es sich bei dem Datentelegramm um ein Broadcast-Datentelegramm handelt, und für den Fall, dass es sich nicht um ein Broadcast-Datentelegramm handelt:
- Übergabe (404) der Quelladresse des Datentelegramms an eine dynamische Adresstabelle (110), und für den Fall, dass es sich um ein Broadcast-Datentelegramm handelt:
- Weiterleitung (412) des Datentelegramms über alle weiteren Ports (104, 106, 108) des Koppelknotens, ohne die Quelladresse des Datentelegramms an die dynamische Adresstabelle (110) zu übergeben.

2. Verfahren nach Anspruch 1, wobei zur Prüfung, ob es sich bei dem Datentelegramm um ein Broadcast-Datentelegramm handelt, geprüft wird, ob das Datentelegramm eine ARP-Anforderung (120) beinhaltet.

3. Verfahren nach Anspruch 1 oder 2 wobei für den Fall, dass es sich bei dem Datentelegramm um ein Broadcast-Datentelegramm handelt, eine IP-Zieladresse des Datentelegramms mit der IP-Adresse des Koppelknotens verglichen wird und keine Weiterleitung des Datentelegramms über die weiteren Ports des Koppelknotens erfolgt, wenn die IP-Zieladresse mit der IP-Adresse des Koppelknotens übereinstimmt.

4. Verfahren nach einem der vorhergehenden Ansprüche 1 bis 3, wobei das Broadcast-Datentelegramm einer Anwendung des Koppelknotens nur übergeben (410) wird, wenn die IP-Zieladresse mit der IP-Adresse des Koppelknotens übereinstimmt.

5. Computerprogrammprodukt in einem Koppelknoten (100) in einem Feldbus eines Automatisierungssystems, wobei der Feldbus für die Echtzeit-Kommunikation ausgebildet ist, mit Programmmitteln zur Durchführung der folgenden Schritte:
- Empfang (400) eines Datentelegramms (118) an einem ersten Port (102) des Koppelknotens,
- Prüfung (402) ob es sich bei dem Datentelegramm um ein Broad-cast-Datentelegramm handelt, und für den Fall, dass es sich nicht um ein Broadcast-Datentelegramm handelt: Übergabe (404) der Quelladresse des Datentelegramms an eine dynamische Adresstabelle, und
- für den Fall, dass es sich um ein Broadcast-Daten telegramm handelt: Weiterleitung (412) des Datentelegramms über alle weiteren Ports des Koppelknotens, ohne die Quelladresse des Datentelegramms an die dynamische Adresstabelle (110) zu übergeben.

6. Computerprogrammprodukt nach Anspruch 5, wobei die Programmmittel so ausgebildet sind, dass zur Prüfung, ob es sich bei dem Datentelegramm um ein Broadcast-Datentelegramm handelt, geprüft wird, ob das Datentelegramm eine ARP-Anforderung (120) beinhaltet.

7. Computerprogrammprodukt nach Anspruch 5 oder 6, wobei die Programmmittel so ausgebildet sind, dass das Broadcast-Datentelegramm einer Anwendung des Koppelknotens nur übergeben wird, wenn die IP-Zieladresse mit der IP-Adresse des Koppelknotens übereinstimmt.

8. Koppelknoten in einem Feldbus eines Automatisierungssystems, wobei der Feldbus für die Echtzeit-Kommunikation ausgebildet ist, mit
- mehreren Ports (102, 104, 106, 108) zum Empfang (400) und zum Senden von Datentelegrammen (118),
- einer dynamischen Adresstabelle (110),
- Mitteln (112) zur Prüfung (402) ob es sich bei einem empfangenen Datentelegramm um ein Broadcast-Datentelegramm handelt,
- Mitteln (112) zur Übergabe (404) einer Quelladresse des empfangenen Datentelegramms an die dynamische Adresstabelle, wenn es sich nicht um ein Broadcast-Datentelegramm handelt,
- und wenn es sich um ein Broadcast-Datentelegramm handelt,
Mitteln zur Weiterleitung (412) des empfangenen Datentelegramms über alle weiteren Ports des Koppelknotens, ohne die Quelladresse des Datentelegramms an die dynamische Adresstabelle (110) zu übergeben.

9. Koppelknoten nach Anspruch 8, wobei die Mittel zur Prüfung so ausgebildet sind, dass zur Prüfung, ob es sich bei dem Datentelegramm um ein Broadcast-Datentelegramm handelt, geprüft wird, ob das Datentelegramm eine ARP-Anforderung (120) beinhaltet.

10. Koppelknoten nach Anspruch 8 oder 9, wobei die Mittel zur Weiterleitung so ausgebildet sind, dass eine Weiterleitung für den Fall unterbleibt, dass es sich bei dem Datentelegramm um eine Broadcast-Datentelegramm handelt, und eine IP-Zieladresse des Datentelegramms mit der IP-Adresse des Koppelknotens übereinstimmt.

11. Koppelknoten nach einem der vorhergehenden Ansprüche 8, 9 oder 10, mit Mitteln zur übergabe (410) des Broadcast-Datentelegramms an eine Anwendung des Koppelknotens, nur wenn die IP-Zieladresse mit der IP-Adresse des Koppelknotens übereinstimmt.

12. Kommunikationssystem mit einem Feldbus eines Automatisierungssystems, wobei der Feldbus für die Echtzeit-Kommunikation ausgebildet ist, und mindestens einem Koppelknoten nach einem der vorhergehenden Ansprüche 8 bis 11.

## Claims

1. Method for operating a switching node (100) in a field bus of an automation system, in which the field bus is designed for realtime communication, with the following steps:
- receiving (400) a data message (118) at a first port (102) of the switching node (100),
- checking (402) whether the data message is a broadcast data message, and if said message is not a broadcast data message:
- passing (404) the source address of the data message to a dynamic address table (110), and if said message is a broadcast data message:
- forwarding (412) the data message via all additional ports (104, 106, 108) of the switching node (100), without passing the source address of the data message to the dynamic address table (110).

2. Method according to Claim 1, in which for the purpose of checking whether the data message is a broadcast data message, a check is made on whether the data message contains an ARP request (120).

3. Method according to Claim 1 or 2, in which if said data message is a broadcast data message, an IP destination address of the data message is compared with the IP address of the switching node and the data message is not forwarded via the additional ports of the switching node if the IP destination address matches the IP address of the switching node.

4. Method according to one of the preceding Claims 1 to 3, in which the broadcast data message is passed (410) to an application of the switching node only if the IP destination address matches the IP address of the switching node.

5. Computer program product in a switching node (100) in a field bus of an automation system, in which the field bus is designed for realtime communication, with program means for performing the following steps:
- receiving (400) a data message (118) at a first port (102) of the switching node,
- checking (402) whether the data message is a broadcast data message, and if said message is not a broadcast data message: passing (404) the source address of the data message to a dynamic address table, and
- if said message is a broadcast data message: forwarding (412) the data message via all additional ports of the switching node, without passing the source address of the data message to the dynamic address table (110).

6. Computer program product according to Claim 5, in which the program means is designed so that for the purpose of checking whether the data message is a broadcast data message, a check is made on whether the data message contains an ARP request (120) .

7. Computer program product according to Claim 5 or 6, in which the program means is designed so that the broadcast data message is passed to an application of the switching node only if the IP destination address matches the IP address of the switching node.

8. Switching node in a field bus of an automation system, in which the field bus is designed for realtime communication, with
- a plurality of ports (102, 104, 106, 108) for receiving (400) and sending data messages (118),
- a dynamic address table (110),
- means (112) for checking (402) whether an incoming data message is a broadcast data message,
- means (112) for passing (404) a source address of the incoming data message to the dynamic address table if the said message is not a broadcast data message, and if said message is a broadcast data message:
- means for forwarding (412) the incoming data message via all additional ports of the switching node, without passing the source address of the data message to the dynamic address table (110).

9. Switching node according to Claim 8, in which the means for checking is designed so that for the purpose of checking whether the data message is a broadcast data message, a check is made on whether the data message contains an ARP request (120) .

10. Switching node according to Claim 8 or 9, in which the means for forwarding is designed so that forwarding does not occur if the said data message is a broadcast data message and an IP destination address of the data message matches the IP address of the switching node.

11. Switching node according to one of the preceding Claims 8, 9 or 10, with means for passing (410) the broadcast data message to an application of the switching node only if the IP destination address matches the IP address of the switching node.

12. Communication system with a field bus of an automation system, in which the field bus is designed for realtime communication, and at least one switching node according to one of the preceding Claims 8 to 11.

## Revendications

1. Procédé d'exploitation d'un noeud de connexion (100) dans un bus de terrain d'un système d'automatisation, le bus de terrain étant conçu pour la communication en temps réel, avec les étapes suivantes :
- réception (400) d'un télégramme de données (118) à un premier port (102) du noeud de connexion (100),
- vérification (402) pour savoir si le télégramme de données est un télégramme de données de diffusion et, si ce n'est pas un télégramme de données de diffusion :
- transfert (404) de l'adresse de source du télégramme de données vers un tableau d'adresse dynamique (110), et si c'est un télégramme de données de diffusion :
- retransmission (412) du télégramme de données par l'intermédiaire de tous les autres ports (104, 106, 108) du noeud de connexion sans transférer l'adresse de source du télégramme de données vers le tableau d'adresse dynamique (110).

2. Procédé selon la revendication 1, dans lequel, pour vérifier si le télégramme de données est un télégramme de données de diffusion, on vérifie si le télégramme de données contient une demande ARP (120).

3. Procédé selon la revendication 1 ou 2, dans lequel, si le télégramme de données est un télégramme de données de diffusion, on compare une adresse de destination IP du télégramme de données à l'adresse IP du noeud de connexion et on n'effectue pas de retransmission du télégramme de données par l'intermédiaire des autres ports du noeud de connexion si l'adresse de destination IP coïncide avec l'adresse IP du noeud de connexion.

4. Procédé selon l'une des revendications précédentes 1 à 3, dans lequel on ne transfère (410) le télégramme de données de diffusion vers une application du noeud de connexion que si l'adresse de destination IP coïncide avec l'adresse IP du noeud de connexion.

5. Programme informatique dans un noeud de connexion (100) dans un bus de terrain d'un système d'automatisation, le bus de terrain étant conçu pour la communication en temps réel, avec des moyens formant programmes pour la mise en oeuvre des étapes suivantes :
- réception (400) d'un télégramme de données (118) à un premier port (102) du noeud de connexion,
- vérification (402) pour savoir si le télégramme de données est un télégramme de données de diffusion et, si ce n'est pas un télégramme de données de diffusion, transfert (404) de l'adresse de source du télégramme de données vers un tableau d'adresse dynamique, et
- si c'est un télégramme de données de diffusion :
retransmission (412) du télégramme de données par l'intermédiaire de tous les autres ports du noeud de connexion sans transférer l'adresse de source du télégramme de données vers le tableau d'adresse dynamique (110).

6. Programme informatique selon la revendication 5, dans lequel les moyens formant programmes sont conçus de telle sorte que, pour vérifier si le télégramme de données est un télégramme de données de diffusion, on vérifie si le télégramme de données contient une demande ARP (120).

7. Programme informatique selon la revendication 5 ou 6, dans lequel les moyens formant programmes sont conçus de telle sorte que le télégramme de données de diffusion n'est transféré vers une application du noeud de connexion que si l'adresse de destination IP coïncide avec l'adresse IP du noeud de connexion.

8. Noeud de connexion dans un bus de terrain d'un système d'automatisation, le bus de terrain étant conçu pour la communication en temps réel, avec :
- plusieurs ports (102, 104, 106, 108) pour la réception (400) et pour l'émission de télégrammes de données (118),
- un tableau d'adresse dynamique (110),
- des moyens (112) pour la vérification (402) pour savoir si le télégramme de données reçu est un télégramme de données de diffusion,
- des moyens (112) pour, si ce n'est pas un télégramme de données de diffusion, le transfert (404) d'une adresse de source du télégramme de données reçu vers le tableau d'adresse dynamique,
- des moyens pour, si c'est un télégramme de données de diffusion, la retransmission (412) du télégramme de données reçu par l'intermédiaire de tous les autres ports du noeud de connexion sans transférer l'adresse de source du télégramme de données vers le tableau d'adresse dynamique (110).

9. Noeud de connexion selon la revendication 8, dans lequel les moyens pour la vérification sont conçus de telle sorte que, pour vérifier si le télégramme de données est un télégramme de données de diffusion, on vérifie si le télégramme de données contient une demande ARP (120).

10. Noeud de connexion selon la revendication 8 ou 9, dans lequel les moyens pour la retransmission sont conçus de telle sorte qu'une retransmission est bloquée si le télégramme de données est un télégramme de données de diffusion et si l'adresse de destination IP du télégramme de données coïncide avec l'adresse IP du noeud de connexion.

11. Noeud de connexion selon l'une des revendications précédentes 8, 9 ou 10, avec des moyens pour le transfert (410) du télégramme de données de diffusion vers une application du noeud de connexion seulement si l'adresse de destination IP coïncide avec l'adresse IP du noeud de connexion.

12. Système de communication avec un bus de terrain d'un système d'automatisation, le bus de terrain étant conçu pour la communication en temps réel, et avec au moins un noeud de connexion selon l'une des revendications précédentes 8 à 11.
